# FASCICULE DE BREVET EUROPEEN

(11) **EP 0 744 281 B1**
(45) Date de publication et mention de la délivrance du brevet: **11.07.2001**
(21) Numéro de dépôt: 96870065.8
(22) Date de dépôt: 20.05.1996
(51) Int. Cl.: B32B 3/12, B60R 13/08, B60R 21/04, G10K 11/16, F16F 3/00, F16F 7/12, G10K 11/172

(54) **Produit insonorisant avec absorbeur d'énergie intégré et procédé pour son obtention**
Schalldämpfendes Produkt mit integriertem Energiedämpfer und Verfahren zu dessen Herstellung
Sound absorbing product having an integrated energy absorber and production method thereof

(30) Priorité: 24.05.1995 EP 95870061
(43) Date de publication de la demande: 27.11.1996
(73) Titulaire: SAI Automotive Sommer Industrie, 92748 Nanterre Cedex (FR)
(72) Inventeur: Poisson, Frederic, 08200 Sedan (FR); Ursu, Dragos, Résidence Ardennes, 08200 Sedan (FR)
(74) Mandataire: Lerner, François

(56) Documents cités:
- DE-A- 3 807 874
- DE-B- 1 231 586
- US-A- 4 687 691
- US-A- 4 917 742

## Description

### Objet de l'invention

La présente invention concerne des produits insonorisants et absorbeurs d'énergie de nature composite, c'est-à-dire constitués de plusieurs matières de nature différente, destinés essentiellement à la production de garniture d'habitacles de véhicules.

La présente invention s'étend également au procédé d'obtention de tels produits et à leur application au domaine de l'industrie automobile.

### Arrière-plan technologique et état de la technique à la base de l'invention

Depuis quelques années, le secteur automobile tente de proposer des solutions afin de réduire le bruit à l'intérieur des véhicules automobiles. Il est bien connu, selon l'état de la technique, d'utiliser des produits d'isolation phonique comme garniture intérieure d'habitacles de véhicules.

Habituellement, ces isolants phoniques sont constitués par un complexe comprenant au moins une mousse souple à pores ouverts qui est obtenue de manière classique par injection et une feuille de masse lourde appelée généralement "septum". C'est la combinaison de la mousse souple à pores ouverts appelée également "ressort" et de la masse lourde étanche qui permet d'obtenir un bon produit d'isolation phonique.

D'autre part, les exigences en matière de sécurité se sont considérablement accrues afin de réduire les conséquences d'un impact pour les occupants d'un véhicule. A cet effet, les éléments servant d'absorbeurs d'énergie sont prévus déjà à l'intérieur de l'habitacle. Pour protéger les membres inférieurs des occupants notamment, il convient de disposer d'éléments absorbeurs d'énergie constitués d'une matière rigide, mais déformable sous le choc, en cas d'accident.

De manière générale, on peut estimer que les matériaux utilisés habituellement comme absorbeurs d'énergie présentent de très mauvaises performances d'isolation acoustique et que de même, les insonorisants présentent une résistance à l'écrasement totalement insuffisante pour pouvoir servir d'absorbeurs d'énergie.

On a déjà proposé dans le document US-A-4247586 un panneau d'atténuation du bruit destiné à un véhicule et qui est formé d'une feuille plastique rigide, d'une fine couche flexible de mousse et d'un tissu extérieur décoratif, les différentes couches étant liées à plat. De nombreuses petites perforations très rapprochées sont formées dans une zone prédéterminée de la feuille rigide. On procède ensuite à un formage en créant une dépression dans la surface opposée à celle revêtue du tissu, ces dépressions comportant des zones de perforation.

Dans ces dépressions, peuvent être placées des matériaux d'absorption phonique. Ce produit de nature assez spécifique, ne comporte pas d'élément particulier destiné à servir d'absorbeurs d'énergie.

Le document FR-A-2504520 décrit un matériau formable d'isolation et d'absorption acoustique pour des véhicules automobiles ainsi que son procédé de formage. Il est constitué d'une couche rigide alvéolaire mais qui ne présente aucune fonction de protection de personnes contre des chocs.

Le document DE-A-3720371 décrit un produit constitué à partir d'un complexe de type sandwich et présentant des caractéristiques d'isolation acoustique. Ce complexe incorpore une structure alvéolaire qui peut être remplie par un matériau de type mousse. Néanmoins, la structure du matériau alvéolaire ne permet pas d'absorber les sollicitations en cas de chocs, et n'assure pas la protection des occupants du véhicule dans lequel ce produit est apposé.

Le document WO-A-8404727 décrit un panneau composite se présentant sous la forme d'une paroi légère, qui comporte en son sein une structure en nids d'abeilles. Un tel panneau est réalisé dans le but d'avoir des propriétés de retardement au feu. Ce document ne mentionne pas de fonction d'absorbeur de chocs et de protection des occupants. De plus, ce panneau ne présente pas de propriétés insonorisantes suffisantes.

Le document DE-A-4131394 décrit un matériau sandwich constitué d'une structure sous forme alvéolaire et destiné à servir d'écran acoustique.

Le document FR-A-2156009 décrit également un panneau acoustique comprenant une âme alvéolée qui est destiné plus précisément à la construction. Ces panneaux sont disposés le long de parois d'immeubles dans le but d'une isolation phonique.

Le document US-A-4162341 décrit un procédé qui permet la réalisation d'un matériau intégrant une structure alvéolaire ayant à la fois des fonctions acoustiques et thermiques.

Enfin, le document DE-B-1231586 décrit un matériau qui est destiné à servir d'absorbeur de chocs et à la protection des occupants d'un véhicule, et qui est constitué selon une des formes d'exécution d'une structure alvéolaire ainsi que d'une couche de couverture élastique. Néanmoins, ce matériau ne présente aucune propriété insonorisante.

Aucun document ne mentionne et, a fortiori, ne décrit une combinaison possible d'une fonction d'isolation phonique et d'absorption de chocs.

### But de l'invention

La présente invention vise à proposer un produit composite nouveau qui permet d'allier les propriétés propres d'un élément insonorisant et d'un élément absorbeur d'énergie afin d'obtenir des propriétés aussi bien insonorisantes que d'absorption d'énergie qui soient au moins aussi bonnes que celles des éléments connus selon l'état de la technique pris individuellement, sans entraîner une épaisseur excessive du produit afin que les frais de pose et l'encombrement soient considérablement réduits.

De manière plus spécifique, le but poursuivi est d'intégrer un absorbeur d'énergie avec une pièce d'insonorisation tel que tablier ou tapis de véhicules automobiles, sans perte des caractéristiques propres des éléments constituants.

### Eléments caractéristiques de l'invention

La présente invention se rapporte à un produit de garniture d'habitacles de véhicule qui présente à la fois des propriétés insonorisantes et d'absorption d'énergie, caractérisé en ce qu'il est constitué par un septum (3) contre la face duquel est appliqué un matériau alvéolaire rigide (1) servant d'absorbeur d'énergie, dont les alvéoles sont garnies partiellement ou totalement d'une mousse (7) à pores ouverts, en ménageant une couche continue de ladite mousse dépassant les lèvres dudit matériau alvéolaire.

On observe que ce produit présente, de manière surprenante, des propriétés d'insonorisation au moins aussi bonnes que les produits classiques, et même meilleures dans certains cas, tout en offrant des propriétés d'absorption d'énergie satisfaisantes, sans augmentation de l'épaisseur du produit.

Les alvéoles sont habituellement toutes garnies d'une mousse à pores ouverts. On observera également que le remplissage peut être soit total, soit partiel.

Lorsque la mousse à pores ouverts ne garnit que partiellement les alvéoles du matériau rigide alvéolaire, ceci provoque la présence de poches d'air ou d'un autre gaz (5) emprisonnées au sein du matériau mais n'altère en rien les propriétés insonorisantes du produit.

Le procédé d'obtention d'un tel produit est caractérisé par le fait que l'on réalise un panneau sous forme d'un élément alvéolaire rigide, généralement du type nids d'abeilles, et on garnit ensuite les alvéoles par injection ou par formation in situ d'une mousse choisie pour ses propriétés d'isolant acoustique en ménageant une couche continue de ladite mousse dépassant les lèvres dudit matériau alvéolaire.

La couche continue de mousse est conformée pour s'appliquer de manière classique sur la tôle en suivant son profil. Généralement, le matériau alvéolaire absorbeur d'énergie n'est disposé que localement, par exemple à hauteur des jambes des passagers. Un produit de ce type peut donc comporter des zones où le matériau alvéolaire n'est pas présent.

La mousse, dans la mesure où elle a été choisie pour être compatible avec les autres constituants, peut servir d'élément de solidarisation entre le septum et l'élément alvéolaire.

Il convient de noter que de nombreuses matières peuvent convenir pour former la matière constituant l'élément alvéolaire. On peut bien entendu recourir aux éléments en nids d'abeilles classiques utilisés comme absorbeurs de chocs mais également à d'autres matières. Des mousses suffisamment rigides peuvent également convenir pour cette fonction.

Que le panneau que l'on désire former soit plat ou non, il est possible d'utiliser un élément alvéolaire ouvert de part en part de conformation adéquate, de former un fond sur ces alvéoles en y appliquant le septum selon la configuration de l'élément alvéolaire et d'injecter dans les différentes alvéoles, la mousse adéquate.

Il est cependant également possible d'utiliser un élément en nids d'abeilles ou similaire comportant un fond et d'appliquer le septum sur ce fond par tout moyen approprié.

Quelle que soit la solution retenue, une caractéristique essentielle de l'invention est le fait qu'une couche continue de la mousse soit réalisée sur la face opposée à celle recouverte par le septum, c'est-à-dire sur la face destinée à être appliquée sur la tôle du véhicule, en empêchant ainsi que les éléments alvéolaires, par leurs lèvres, ne viennent en contact avec la tôle.

Les éléments alvéolaires sont conçus pour s'écraser sous l'effet du choc en absorbant ainsi l'énergie par déformation. Ils seront calculés de manière à se conformer aux normes imposées, c'est-à-dire résister à des efforts d'écrasement jusqu'à 6 KN par exemple pour ensuite s'écraser avec absorption d'énergie, par déformation de leurs parois latérales.

Il est possible selon l'invention d'intégrer en un seul élément la fonction d'isolant acoustique et d'absorption d'énergie, et ceci sans que, de manière surprenante, l'incorporation d'un élément rigide n'occasionne un effet de transmission phonique à l'ensemble. En pratique, on observe que l'épaisseur habituelle d'un élément d'isolation phonique classique (septum et ressorts) permet l'incorporation d'un élément alvéolaire absorbeur de chocs répondant aux normes prescrites, sans perte des propriétés d'isolation acoustique et sans nécessité d'augmenter l'épaisseur de l'ensemble.

La technique permet donc de manière simple et efficace de combiner à la fois des propriétés d'absorption d'énergie et d'isolation phonique tout en s'adaptant aux éventuelles variantes de configuration du panneau.

L'invention sera décrite plus en détails à titre d'illustration sans caractère limitatif en référence à des représentations schématiques des produits obtenus et à l'aide d'exemples illustrant les caractéristiques physiques réalisables.

### Brève description des dessins.

- La figure 1: représente une vue schématique en coupe d'une forme d'exécution d'un produit selon l'invention;
- La figure 2: représente une vue schématique en perspective éclatée correspondant à la figure 1;
- La figure 3: représente le schéma d'un appareillage d'essais utilisé pour tester la résistance mécanique des produits de l'invention;
- La figure 4: représente une courbe exprimant les résultats de résistance mécanique pouvant être atteints; et
- La figure 5: représente une courbe des propriétés acoustiques.

### Description détaillée de formes d'exécution de l'invention

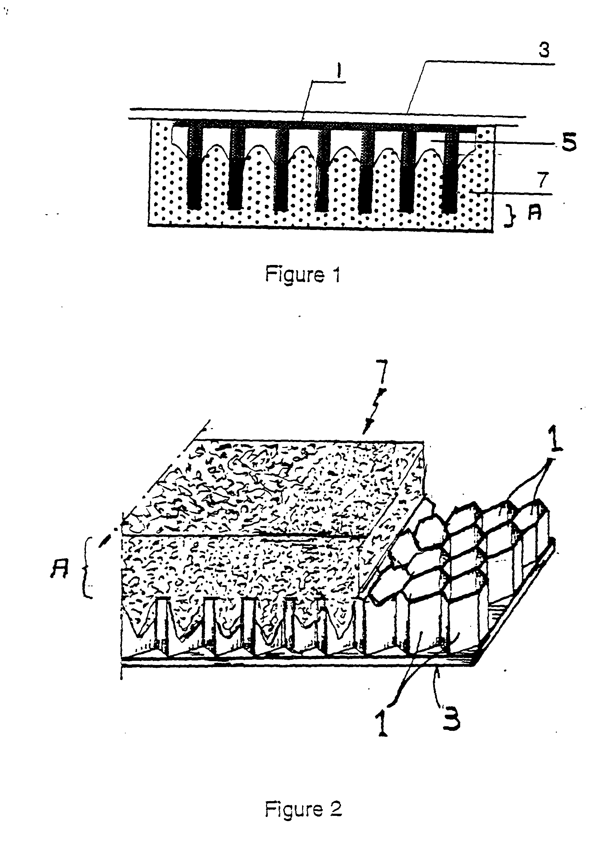

Dans le cas des figures 1 et 2, un matériau alvéolaire (1) est constitué sous forme classique en nids d'abeilles et pourvu sur une des faces d'un septum (3). Le matériau alvéolaire peut être ouvert de part en part et le septum peut être apposé sur une face pour constituer un fond pour ces alvéoles. Dans ce cas, le septum (3) et le matériau alvéolaire (1) seront de préférence solidarisés par la mousse injectée ultérieurement.

Selon une variante d'exécution, on peut utiliser un matériau alvéolaire pourvu d'un fond sur lequel le septum est appliqué, avant ou après le garnissage des alvéoles par la mousse.

Selon une autre variante, il est possible de constituer le matériau alvéolaire et une couche de fond en une seule pièce, la couche de fond servant à la fois de septum et d'obturation des nids d'abeilles.

Une mousse (7) est ensuite injectée pour garnir au moins partiellement les alvéoles. De préférence, la mousse ne remplit que partiellement les alvéoles en laissant des poches vides (5).

Cette mousse sur la face opposée au septum, qui est celle destinée à s'appliquer sur la tôle, doit être suffisamment épaisse pour ménager une zone continue de mousse (dite zone de découplage), représentée par l'accolade "A" dans la figure 1 et constituant un isolant phonique entre les éléments alvéolaires et ladite tôle.

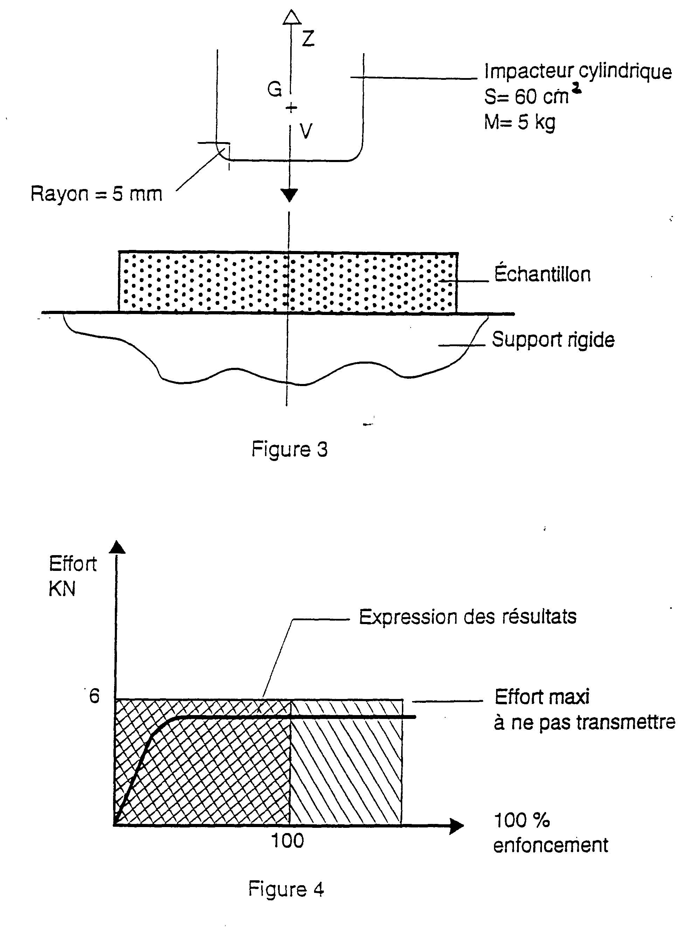

A titre d'exemple illustratif, ces produits ont été testés à l'aide d'un "impacteur" cylindrique (figure 3) présentant une section de 60 cm² et une masse de 5 kg. Les échantillons d'une dimension de 200 x 200 mm et d'une hauteur de 25 à 50 mm sont soumis à un effort résultant de 600 daN.

On mesure l'effort de compression en fonction d'un pourcentage d'enfoncement.

Selon les exigences actuelles des constructeurs, pour respecter les critères de protection des membres inférieurs, on demande que la force de compression du tibia soit inférieure à 200 daN, ce qui entraîne que la résistance à la compression du matériau alvéolaire doit être de 4 daN/cm² au moins.

On calcule que pour une vitesse d'impact d'un passager de 6 m/sec. et dans le cas du conducteur de 8 m/sec., on obtient respectivement un effort de 90 J et de 160 J. Dans ce cas, la valeur de compression d'un absorbeur idéal est respectivement de 15 et de 27 mm.

Le diagramme de la figure 4 indique que les conditions prescrites peuvent être remplies avec un matériau du type de celui de l'invention.

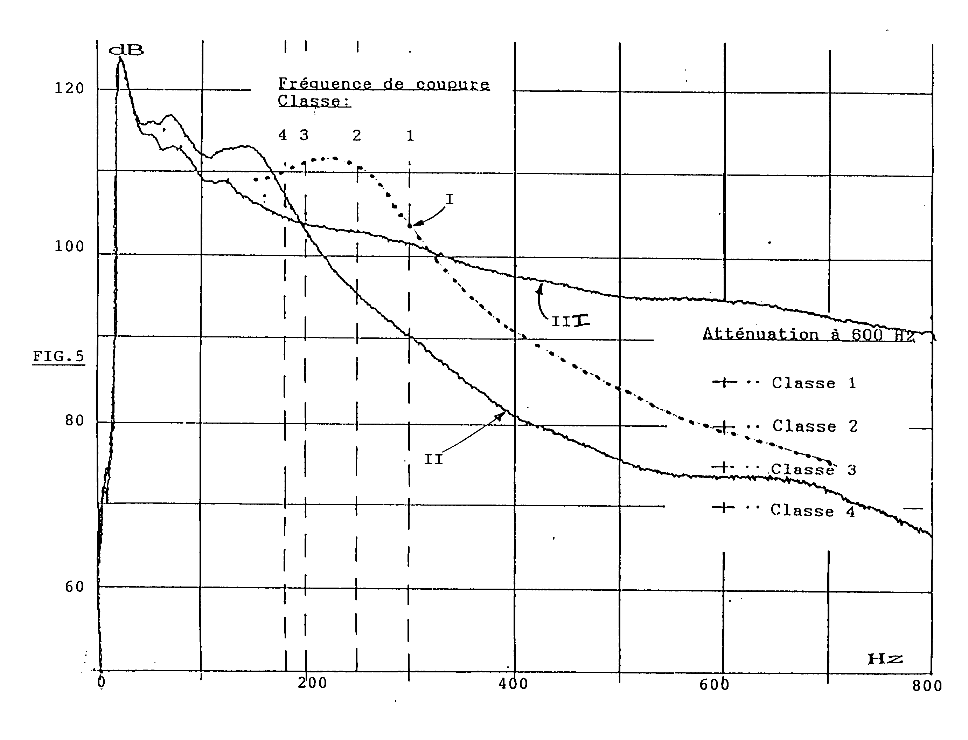

Dans la figure 5, on a repris les résultats d'essais comparatifs entre un isolant phonique classique (produit I) et un produit selon l'invention comportant un absorbeur de chocs intégré (produit II). Ces deux produits présentent une épaisseur totale de 30 mm. La courbe III est celle de la référence de l'appareil de mesure nu.

Dans les deux cas, les produits comportent un septum de masse surfacique de 3,5 kg/m².

Le produit I est constitué d'une première couche de 20 mm d'épaisseur de polyuréthanne (PU) rigide de masse volumique de 100 kg/m³ remplissant la fonction d'absorption d'énergie et ensuite, la face opposée à celle du septum est formée par 10 mm de PU insonorisant de 60 kg/m³ de masse volumique.

Le produit II est constitué par un absorbeur de chocs intégré dans une masse de PU insonorisant de 60 kg/m³ de 30 mm d'épaisseur. L'absorbeur est constitué par du polypropylène (PP3120 fourniture APPRYL) sous forme d'alvéoles jointives carrées à fond intégré obtenues par injection, d'une épaisseur de paroi variable de 0,8 à 0,5 mm. La hauteur de l'absorbeur de chocs est telle qu'une zone dite de découplage phonique de 10 mm d'épaisseur soit ménagée depuis l'extrémité des lèvres des alvéoles jusqu'à la face opposée au septum. Sa rigidité, définie par sa résistance à la compression, est d'au moins 1 daN/cm², et de préférence supérieure à 4 daN/cm².

Les résultats des mesures sont reproduits à la figure 5. On observe un effet d'atténuation à 600 Hz de 21 dB et une fréquence de coupure à 192 Hz.

Bien qu'on ait décrit des formes d'exécution préférées de l'invention, il est bien entendu possible d'y apporter de nombreuses modifications. C'est ainsi que le produit selon l'invention peut être associé à d'autres matières, de préférence sous forme d'une couche continue supplémentaire. La face non garnie du septum peut être notamment recouverte d'un élément sous forme d'une plaque ou d'une feuille de matière plastique.

## Revendications

1. Produit de garniture d'habitacles de véhicules présentant à la fois des propriétés insonorisantes et d'absorption d'énergie, caractérisé en ce qu'il est constitué par un septum (3) contre la face duquel est appliqué un matériau alvéolaire rigide (1) servant d'absorbeur d'énergie, dont les alvéoles sont garnies partiellement ou totalement d'une mousse (7) à pores ouverts en ménageant une couche continue de ladite mousse dépassant les lèvres dudit matériau alvéolaire.

2. Produit de garniture d'habitacles de véhicules selon la revendication 1, caractérisé en ce que le remplissage des alvéoles par la mousse à pores ouverts n'est que partiel en provoquant la présence de poches (5) d'air ou d'un autre gaz emprisonnées au sein du matériau.

3. Produit de garniture d'habitacles de véhicules selon la revendication 1 ou 2, caractérisé en ce que toutes les alvéoles sont garnies d'une mousse à pores ouverts.

4. Procédé de production d'un produit de garniture d'habitacles de véhicules selon l'une quelconque des revendications précédentes, caractérisé en ce qu'on réalise un panneau sous forme d'un élément alvéolaire rigide, généralement du type nids d'abeilles et on garnit les alvéoles ensuite par injection ou par formation in situ, d'une mousse choisie pour ses propriétés d'isolant acoustique en ménageant une couche continue de ladite mousse dépassant les lèvres dudit matériau alvéolaire.

5. Procédé selon la revendication 4, caractérisé en ce qu'un septum est posé sur l'élément alvéolaire préalablement à l'injection de la mousse en servant de fond à un élément alvéolaire ouvert de part en part.

6. Procédé selon la revendication 5, caractérisé en ce que la solidarisation entre le septum et l'élément alvéolaire est assurée par la mousse.

7. Procédé selon la revendication 4, caractérisé en ce que l'on utilise un matériau alvéolaire pourvu d'un fond sur lequel le septum est appliqué, avant ou après le garnissage des alvéoles par la mousse.

8. Procédé selon la revendication 4, caractérisé en ce que le matériau alvéolaire et une couche de fond sont en une seule pièce, la couche de fond servant à la fois de septum et d'obturation des nids d'abeilles.

## Claims

1. An article for trimming a passenger compartment of a vehicle, the article having both energy-absorbing capacities and sound-proofing capacities, characterized in that it comprises a septum (4) against a face of which is applied a rigid cellular material (1) having the function of an energy-absorber, the cells of the material being partially or completely filled with a foam (7) having open cells, a continuous depth of said foam extending beyond the end lips of said cellular material.

2. The article for trimming a passenger compartment of a vehicle according to claim 1, characterized in that the open-cell foam is only partially filling the alveols, so that air pockets (5) or pockets containing another gas are embedded within the material.

3. The article for trimming a passenger compartment of a vehicle according to claim 1 or to claim 2, characterized in that all the alveols are filled with a foam having open cells.

4. A process for manufacturing an article for trimming a passenger compartment of a vehicle according to anyone of the preceding claims, characterized in that a panel is manufactured as a rigid cellular element, of a honeycomb type, and then the alveols are filled by injecting, or by in situ forming, a foam selected for its sound-proofing characteristics, a continuous depth of said foam extending beyond the end lips of said cellular material.

5. The process according to claim 4, characterized in that a septum is disposed on the cellular element, prior to injecting the foam, so that the septum defines a bottom for the cellular element, said cellular element being opened through and through.

6. The process according to claim 5, characterized in that the foam is interlocking the septum and the cellular element.

7. The process according to claim 4, characterized by the step of using a cellular material provided with a bottom on which the septum is applied, prior or after filling the alveols with the foam.

8. The process according to claim 4, characterized in that the cellular material and a layer defining a bottom are made of a one piece, the bottom layer having a function of both a septum and a layer for closing honeycombs.

## Patentansprüche

1. Auskleidungsprodukt für Innenräume von Fahrzeugen, das gleichzeitig schalldämmende und energieabsorbierende Eigenschaften aufweist, dadurch gekennzeichnet, dass es aus einer Wand (3) besteht, auf deren Oberseite ein starres zellenförmiges Material angeordnet ist, das energieabsorbierend wirkt, und dessen Zellen teilweise oder ganz mit einem offenporigen Schaumstoff (7) versehen sind, wobei eine kontinuierliche Schaumstoffschicht der Ränder des zellenförmigen Materials überragt.

2. Auskleidungsprodukt für Innenräume von Fahrzeugen nach Anspruch 1, dadurch gekennzeichnet, dass die Zellen nur teilweise mit dem offenporigen Schaumstoff gefüllt sind, was zu dem Vorhandensein von Taschen (5) mit Luft oder einem anderen Gas führt, die inmitten des Materials eingeschlossen sind.

3. Auskleidungsprodukt für Innenräume von Fahrzeugen nach Anspruch 1 oder 2, dadurch gekennzeichnet, dass alle Zellen mit einem offenporigen Schaumstoff versehen sind.

4. Verfahren zur Herstellung eines Auskleidungsprodukts für Innenräume von Fahrzeugen nach einem der vorhergehenden Ansprüche, dadurch gekennzeichnet, dass eine Blende in Form eines starren zellenförmigen Elements hergestellt wird, im wesentlichen vom Typ einer Bienenwabe, und danach die Zellen durch Einspritzen oder Bildung in situ mit einem Schaumstoff versehen werden, der wegen seiner akustisch isolierenden Eigenschaften ausgewählt ist, wobei eine kontinuierliche Schaumstoffschicht gebildet wird, die die Ränder der zellenförmigen Materials überragt.

5. Verfahren nach Anspruch 4, dadurch gekennzeichnet, dass vor dem Einspritzen des Schaumstoffes eine Wand auf das zellenförmige Element gelegt wird, wobei sie einem nach beiden Seiten offenen zellenförmigen Element als Boden dient.

6. Verfahren nach Anspruch 5, dadurch gekennzeichnet, dass die Verbindung zwischen der Wand und dem zellenförmigen Element durch den Schaumstoff hergestellt wird.

7. Verfahren nach Anspruch 4, dadurch gekennzeichnet, dass ein zellenförmiges Material verwendet wird, das einen Boden aufweist, auf dem die Wand vor oder nach dem Versehen der Zellen mit dem Schaumstoff angeordnet wird.

8. Verfahren nach Anspruch 4, dadurch gekennzeichnet, dass das zellenförmige Material und eine Bodenschicht aus einem Stück bestehen, wobei die Bodenschicht sowohl als Wand, als auch als Abdeckung der Waben dient.
